# EUROPÄISCHE PATENTSCHRIFT

(11) **EP 0 617 214 B1**
(45) Veröffentlichungstag und Bekanntmachung des Hinweises auf die Patenterteilung: **25.09.1996**
(21) Anmeldenummer: 94102935.7
(22) Anmeldetag: 26.02.1994
(51) Int. Cl.: F16H 57/02, F16H 1/12, H02K 7/116

(54) **Achsversetztes Winkelgetriebe**
Angular gearing with displaced axis
Transmission angulaire à axes décalés

(30) Priorität: 24.03.1993 DE 4309559
(43) Veröffentlichungstag der Anmeldung: 28.09.1994
(73) Patentinhaber: SEW-EURODRIVE GMBH & CO., D-76646 Bruchsal (DE)
(72) Erfinder: Mensing, Norbert, D-76646 Bruchsal (DE); Kimmich, Siegfried, D-76703 Kraichtal (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- DE-U- 1 646 578
- FR-A- 1 238 825
- FR-A- 2 109 232
- FR-A- 2 597 558
- US-A- 3 143 897
- US-A- 4 260 918

## Beschreibung

Die Erfindung betrifft ein achsversetztes Winkelgetriebe.

In der Regel werden achsversetzte Winkelgetriebe als Schneckengetriebe und Getriebemotoren als Schneckengetriebemotoren ausgebildet (bei konstantem Raddurchmesser und einem übersetzungsverhältnis von i ≥ 8). Das als Schnecke ausgebildete Ritzel muß dabei im Gehäuse des Schneckengetriebes aus Stabilitätsgründen beidseitig gelagert sein. Bei herkömmlichen Schneckengetriebemotoren weist darüber hinaus die Welle des Motors im Motorgehäuse eine zweiseitige Lagerung auf. Dies ist aufwendig.

Die US-A-3 143 897 zeigt einen Getriebemotor mit einem angesetzten Winkelgetriebe. Bei diesem Motor ist die einstückige Motorachse beidseits in am eigentlichen Motorgehäuse unlösbar angesetzten Lagerschilden gelagert, wobei die dem Getriebegehäuse zugewandte Lagerung ein Kugellager ist. Die Motorwelle ragt auf der dem anzusetzenden Getriebegehäuse zugewandten Seite aus dem Motorgehäuse bzw. dem dortigen Lagerschild und ist mit einem Ritzel versehen. Das Ritzel kann einstückig mit der Motorwelle ausgebildet oder kraftschlüssig auf dieser aufgesetzt sein. Das lediglich das Zahnrad tragende Getriebegehäuse wird mittels Schrauben an dem im zugewandten Lagerschild des Motorgehäuses derart befestigt, daß das Zahnrad mit dem dann in das Gehäuse ragenden Ritzel in Eingriff gelangt.

Der Erfindung liegt daher die Aufgabe zugrunde, unter Vermeidung der vorgenannten Nachteile ein Winkelgetriebe zu schaffen, das bei kompakter Ausgestaltung fertigungstechnisch konstruktiv nur einen geringen Aufwand beinhaltet, den Ansatz eines Motors mit nur einer Lagerung ermöglicht und im übrigen in einem Gehäuse und bei konstantem Planraddurchmesser weite Übersetzungsspannen in einem Bereich von I = 8 bis 300 ermöglicht, ohne daß für die verschiedenen Übersetzungen unterschiedliche Gehäusekonturen und -geometrien erforderlich sind.

Erfindungsgemäß wird die genannte Aufgabe durch ein achsversetztes Winkelgetriebe mit großem Achsversatz nach dem Anspruch 1 gelöst.

Beim erfindungsgemäßen Winkelgetriebe ist das Ritzel als solches über ein Hohlwellenabschnitt in einem mit dem Gehäuse des Getriebes verbundenen Lagerschild gelagert, wobei das Gehäuse zusammen mit dem Lagerschild und über diesen am Motor ansetzbar ist, wobei das Ritzel über den Hohlwellenabschnitt kraftschlüssig mit der Motorwelle verbindbar ist. Die Herstellung ist daher einfacher und preiswerter. Der Achsabstand von Ritzel und Getriebeabtriebswelle kann genauer eingehalten werden. Die Abdichtung des ölgefüllten Getriebeinneren ist unproblematisch; sie kann getriebeseitig des zwischen Getriebe und Motor angeordneten (Ritzel) Lagers erfolgen und so durch das Getriebeöl geschmiert und gekühlt werden, so daß in einfacherweise Verschleiß und Überhitzung von Dichtringen vermieden werden kann.

Die Erfindung schafft ein kompaktes Winkelgetriebe, indem sie mit großem Achsversatz zwischen Zahnradachse und Ritzelachse arbeitet, wobei das Verhältnis zwischen Planraddurchmesser und Achsversatz in der Regel im Bereich zwischen 2,5 und 5 liegen sollte. Es ist weiterhin zur Lösung der genannten Aufgabe vorgesehen, daß das Ritzel lediglich einseitig, nämlich an einer dem Zahnrad abgewandten Lagerstelle, gelagert ist, im Gegensatz zu Schneckengetrieben, bei denen, wie gesagt, zwei Lagerstellen notwendig sind. Zur einfachen Verbindung des Ritzels mit dem Motor ist dieses mit einem Hohlwellenahschnitt ausgebildet, so daß die Abtriebswelle des Motors in den Hohlwelle nahschnitt des Ritzels eingesteckt und dort mit diesem drehfest und kraftschlüssig verbunden werden kann. Knickbewegungen von Ritzel- und Motorwelle wird dadurch entgegengewirkt, daß Toleranzen gering sind und die Motorwelle insofern formschlüssig vom Ritzel umgriffen ist.

Gemäß der Erfindung ist vorgesehen, daß das Ritzel in einem am Motor ansetzbaren Lagerschild gelagert ist, wobei insbesondere das Lagerschild einstückig mit einem Gehäuse des Getriebes verbunden ist, wodurch auf ein separates A-Lagerschild am Motor verzichtet werden kann.

Weitere Ausgestaltungen der erfindungsgemäßen Vorrichtung sehen vor, daß der Durchgang des Ritzels zum Getriebeinneren durch eine Radialwellendichtung abgedichtet ist, und/oder daß das Lager für den Hohlwellenabschnitt des Ritzels im Getriebegehäuse zwischen einer dem Zahnrad zugewandten Schulter des Gehäuses und einem öffnungsseitig in eine Nut im Gehäuse eingesetzten Sprengring axial gehalten ist.

Eine bevorzugte Weiterbildung zeichnet sich dadurch aus, daß der Hohlwellenabschnitt des Ritzels axial fest im Laser gehalten ist. Darüber hinaus kann vorgesehen sein, daß der Hohlwellenabschnitt des Ritzels getriebeseitig über eine Schulter, gegebenenfalls unter Zwischenlage einer Stützscheibe, und motorseitig über eine in ihm ausgebildete Nut und einen in dieser einsitzenden Sprengring axial gehalten ist, wobei insbesondere zwischen Lager und Sprengring eine Stützscheibe angeordnet ist.

Weitere Ausbildungen der Erfindung sehen vor, daß das Getriebegehäuse bezüglich der Lagerstellen in Richtung der Achse des Zahnrads senkrecht zur Achse des Ritzels symmetrisch ausgebildet ist und daß im Getriebegehäuse in Richtung der Achse des Zahnrads senkrecht zur Achse des Ritzels symmetrisch Lagerstellen für Lager zur Lagerung einer Welle für das Zahnrad angeordnet sind, wobei insbesondere Nuten ausgebildet sind, in die zur axialen Festlegung der Lager für die Welle Sprengringe eingreifen.

In weiterer bevorzugter Ausgestaltung kann vorgesehen sein, daß die Welle des Zahnrads abgestuft ausgebildet ist, wobei der größte Durchmesser in einem Mittelteil im Bereich der Achse des Ritzels angeordnet ist, wobei insbesondere das Zahnrad auf einem Tragbereich reduzierten Durchmessers zwischen einer Schulter der Welle und einem Lager axial gehalten ist und/oder bei Vorsehung eines Flansches die Welle einseitig im Flansch gelagert ist.

Ein erfindungsgemäßer Getriebemotor mit einem erfindungsgemäßen Winkelgetriebe und einem Elektromotor zeichnet sich dadurch aus, daß der Motor lediglich ein Motorlager aufweist, wobei insbesondere das einzige Motorlager des Motors auf der einer Abtriebswelle abgewandten Seite angeordnet ist.

Durch die Erfindung wird damit insgesamt ein Winkelgetriebe bzw. ein Getriebemotor mit einem solchen Winkelgetriebe geschaffen, wobei letzteres vorzugsweise mit einem integrierten Lagerschild für den Motor versehen ist. Das Gehäuse des Getriebes kann auf der Oberseite (die durch keine der Achsen der drehbaren Teile durchsetzt ist) mit einer Montageöffnung versehen sein, die durch einen Deckel verschließbar ist.

Ein wesentlicher Vorteil des erfindungsgemäßen Getriebes liegt auch darin, daß als Verzahnungswerkstoff sowohl für das Ritzel als auch für das Zahnrad Stahl verwendet werden kann und nicht teilweise Bronze eingesetzt werden muß.

Das Ritzel des erfindungsgemäßen Winkelgetriebes ist so gestaltet, daß es einerseits die Abdichtung des Getriebeinneren gegenüber dem Motor bewirkt, darüber hinaus auch, wie erläutert, eine weitere Lagerung der Motorwelle übernimmt, so daß diese im Motorgehäuse nur an einer Stelle gelagert sein muß. Die Abdichtung und kraftschlüssige Verbindung erfolgt durch Kleben des Ritzels auf die Motorwelle. Weiterhin kann zwischen Ritzel und Getriebegehäuse ein Radialwellendichtring vorgesehen sein.

Auch das Planrad ist auf seiner Welle vorzugsweise mit einer Klebeverbindung fixiert, welche die Kraftübertragung sicherstellt. Ein wesentlicher Vorteil der Erfindung liegt darin, daß eine einfache Montage möglich ist, da das Verzahnspiel gegebenenfalls mittels Ausgleichsscheiben um die Welle des Zahnrads zwischen diesem und einem ortsfesten Widerlager (Sprengring) für dieses möglich ist.

Die Erfindung ermöglicht unterschiedliche Bauweisen des Gehäuses, nämlich mit und ohne Flansch, rechts- und linksseitigem Wellenstumpf, mit Hohlwelle sowie Kombinationen der vorgenannten.

In allen Fällen kann bei gegebener Übersetzung das gleiche Planrad verwendet werden, da bei dem erfindungsgemäß vorgesehenen Winkelgetriebe die Verzahnung keine triviale ist und es daher vorteilhaft ist, wenn für unterschiedlichste Einsatzmöglichkeiten möglichst wenig verschiedene bewegliche Getriebeteile (Planrad, Ritzel) erforderlich sind.

Weitere Vorteile und Merkmale der Erfindung ergeben sich aus den Ansprüchen und aus der nachfolgenden Beschreibung, in der Ausführungsbeispiele des erfindungsgemäßen Winkelgetriebes unter Bezugnahme auf die Zeichnung im einzelnen erläutert sind. Dabei zeigt:
- Figur 1: die Darstellung eines Getriebemotors mit einem erfindungsgemäßen achsversetzten Winkelgetriebe, teilweise geschnitten;
- Figuren 2a+b: einen Schnitt entlang S-S der Figur 1 bei einem Winkelgetriebe ohne Flansch;
- Figuren 3a+b: einen der Figur 2 entsprechenden Schnitt bei einem Winkelgetriebe mit einem abtriebsseitigen Flansch;
- Figuren 4a+b: Schnitte entsprechend S-S mit einer Hohlwelle des Zahnrads ohne (Figur 4a) bzw. mit (Figur 4b) Flansch.

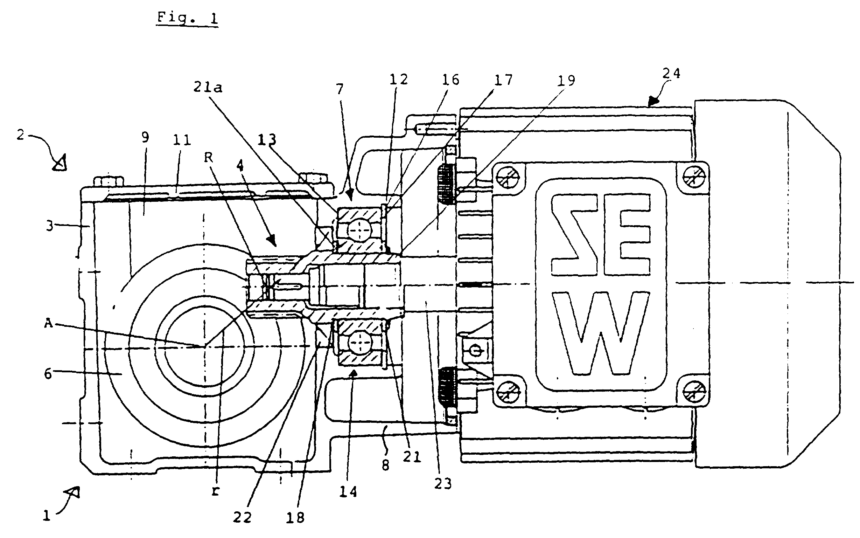

Der in der Figur 1 dargestellte Getriebemotor 1 weist ein Winkelgetriebe 2 mit großem Achsversatz auf. Das Winkelgetriebe 2 hat ein Getriebegehäuse 3, in dem ein antriebsseitiges Ritzel 4 und ein abtriebsseitiges Zahnrad 6 in Form eines stirnverzahnten Planrades gelagert sind.

Im dargestellten Ausführungsbeispiel beträgt der Achsversatz von Achse A des Zahnrads 6 und Achse R des Ritzels 4 zum Durchmesser des Zahnrads 6 etwa ein Viertel, so daß die Achse R des Ritzels 4 und ein Radius r des Zahnrads 6 zum Angriffspunkt des Ritzels 4 an diesem etwa einen Winkel von 45° einschließen.

Dieser Achsversatz ist optimal. Es können aber auch andere große Achsversätze gewählt werden, ohne daß der Achsversatz die Hälfte des Durchmessers des Zahnrads 6 beinhalten soll, wobei also das erfindungsgemäße Winkelgetriebe kein Schneckengetriebe ist.

Bevorzugterweise sollte der Achsversatz zwischen 2/10 und 4/10 des Zahnraddurchmessers liegen.

Das Getriebegehäuse 3 weist eine motorseitige Lagerung 7 für das Ritzel 4 auf. Im dargestellten Ausführungsbeispiel ist die Lagerung 7 in einem motorseitigen Lagerschild 8 ausgebildet, das hier einstückig am Getriebegehäuse ausgebildet ist.

Das Getriebegehäuse 3 ist auf einer durch keine der Achsen A, R durchsetzten Oberseite mit einer Montageöffnung 9 versehen, die durch ein Verschlußteil 11 verschließbar ist.

Die Lagerung 7 weist einen Lagerring 12 auf, an den sich getriebeseitig eine nach innen gerichtete Schulter 13 anschließt.

In der Lagerung 7, innerhalb des Lagerrings 12, ist ein (Kugel-)Lager 14 für das Ritzel 4 angeordnet. Das Lager wird im Lagerring 12 zwischen der Schulter 13 und einem in einer Nut 16 des Lagerrings 12 eingesetzten Sprengring 17 (Seegerring) axial festgehalten.

Das Ritzel 4 ist mit einem Hohlwellenabschnitt ausgebildet. Dieser wird im Lager 14 über eine an ihm ausgebildete Schulter 18 und einen in eine Nut 19 des Ritzels 4 eingreifenden Sprengring unter Zwischenlage jeweils einer Stützscheibe 21, 21a axial gehalten.

Zum Inneren des Gehäuses 3 hin ist es durch einen Radialwellendichtring 22 abgedichtet.

In das Innere des Ritzels 4 greift eine Motorwelle 23 eines Elektromotors 24 des Getriebemotors 1 ein.

Die Motorwelle 23 ist mit dem Ritzel 4 durch eine Verklebung, beispielsweise mit Loctite oder einem ähnlichen geeigneten Klebstoff, kraftschlüssig verbunden.

Die Motorwelle 23 ist darüber hinaus im Elektromotor 24 lediglich auf der getriebeabgewandten Seite mittels eines in üblicher Weise ausgestalteten, an sich bekannten Lagers gelagert, ohne daß im Elektromotor selbst ein weiteres Lager vorhanden wäre. Die Lagerung durch das Lager 14 reicht sowohl für die Motorwelle 23 als auch das in diese einerseits formschlüssig eingreifende und damit gegen Knickbewegungen formschlüssig, zur Übertragung der Drehbewegung in beschriebener Weise kraftschlüssig verbundene Ritzel 4 vollständig aus.

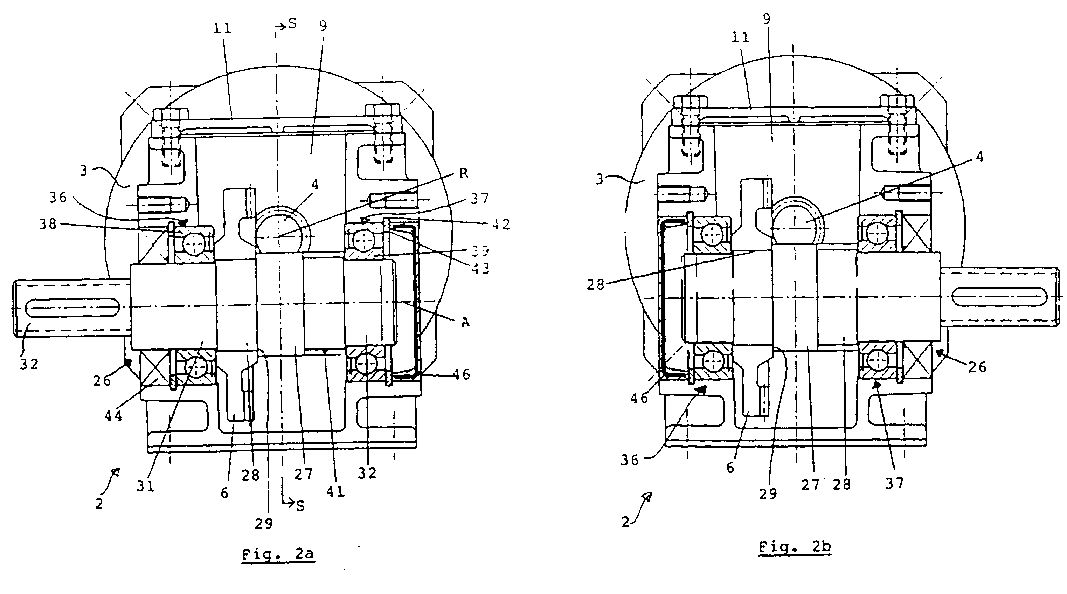

Die Figuren 2a und b zeigen einen Schnitt entlang S-S der Figur 1 bei einem Winkelgetriebe 2 ohne Flansch mit einer massiven Abtriebswelle 26. Der Vergleich der Figuren 2a und 2b zeigt, daß ein rechts- und linksseitiger Abtrieb durch entsprechend gespiegelte Anordnung der Welle 26 erreicht werden kann, wobei das Zahnrad 6 jeweils an der gleichen Stelle im Gehäuse sitzt.

Dies wird dadurch erreicht, daß die Welle 26 abgestuft ausgebildet ist, und zwar über einen Teil ihrer Länge symmetrisch. Sie weist einen beim Einbau symmetrisch zur Achse R des Ritzels 4 ausgebildeten Mittelteil maximalen Durchmessers 27 auf, an den sich beidseitig wahlweise verwendbare Tragbereiche 28 für das Zahnrad 6 mit reduziertem Durchmesser anschließen, so daß zwischen dem Mittelteil 27 und den Tragbereichen 28 eine Schulter 29 ausgebildet ist, die gegebenenfalls zur Anlage des Zahnrads 6 dient. An die Tragbereiche 28 schließen sich beidseitig weiter im Durchmesser reduzierte Lagerabschnitte 31,32 an, die in ihrem Durchmesser und Länge gleich ausgebildet sind. Danach wird die Spiegelsymmetrie nicht fortgesetzt, da an einen Lagerabschnitt 31 der Wellendichtungssitz und ein Wellenstumpf 32 anschließen, mit dem die Wellen der durch den Getriebemotor 1 bzw. das Winkelgetriebe 2 anzutreibenden Geräte verbindbar sind.

In Richtung der Achse A des Zahnrads 6 sind im Getriebegehäuse 3 symmetrisch zur Achse R des Ritzels 4 Lagerbereiche 36,37 für die Welle 26 ausgebildet, in denen (Kugel-) Lager 38,39 angeordnet sind, die axial einerseits durch eine Distanzhülse 41 und das Planrad 6 und andererseits auf ihrer jeweils dem Ritzel 4 bzw. dem Zahnrad 6 abgewandten Seite durch in Nuten 42 des Gehäuses 3 angeordnete Sprengringe 43 (Seegerringe) gehalten sind.

Auf der dem Wellenstumpf 32 zugewandten Seite ist zwischen Gehäuse 3 und Welle 26 im Bereich des hier verlängerten Lagerabschnitts 31 eine Radialwellendichtung 44 zur Abdichtung vorgesehen, während auf der gegenüberliegenden Seite die Öffnung durch einen dicht einsitzenden Deckel 46 abgedichtet ist.

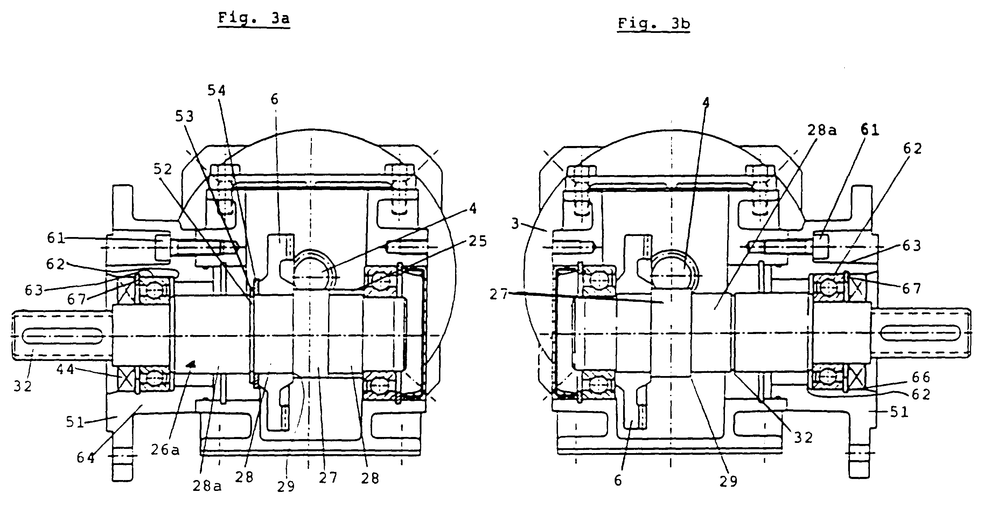

Die Figuren 3a und 3b zeigen eine grundsätzlich ähnliche Ausgestaltung wie die Figuren 2a und 2b - nur daß die Ausgestaltung der Figuren 3a und 3b nicht flanschlos ist, sondern einen Flansch 51 zur Befestigung oder Verbindung mit dem anzutreibenden Gerät aufweist, wobei der Flansch 51 gleichzeitig zur Lagerung der Welle 26a dient.

Auch hier ist die beidseitige Ausbildung möglich. Insofern und insoweit Ausgestaltungen der Figuren 3a und 3b mit solchen der Figuren 2a und 2b übereinstimmen, wird zur Vermeidung von Wiederholungen auf die Erläuterung der Figuren 2a und 2b verwiesen.

Der Flansch 51, der im übrigen bei beiden Ausgestaltungen der Figuren 3a und 3b gleich ausgebildet ist, ist mittels Schrauben 61 am Gehäuse 3 befestigt. Der Flansch 51 weist innenseitig einen abgesetzten Lagerring 63 für ein Lager 64 der Welle 26a auf, das axial zwischen dieser Schulter und einem in einem Ringflansch 66 des Flansches 51 eingesetzten Sprengring 67 gehalten ist, an den sich nach außen hin die Radialwellendichtung 44 anschließt.

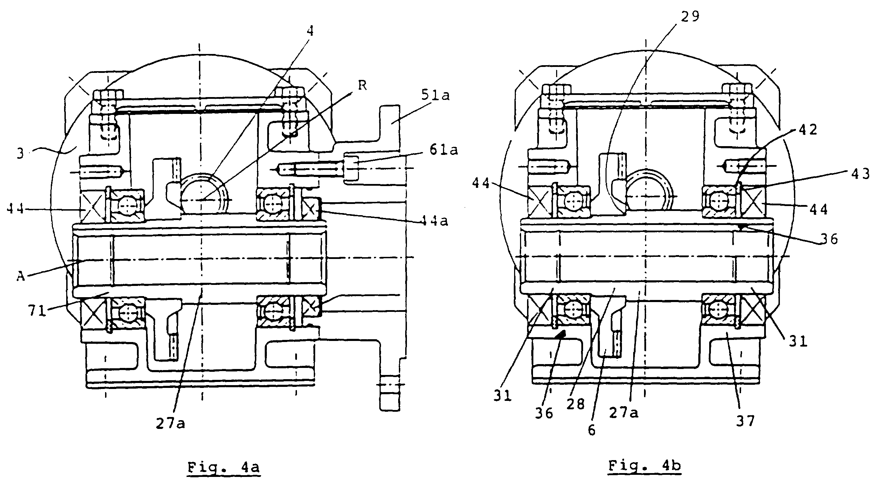

Die Ausgestaltungen der Figuren 4a und 4b unterscheiden sich von den unter Bezugnahme auf die Figuren 2a,b und 3a,b beschriebenen durch die Vorsehung einer Hohlwelle 71, die in ihrem Inneren in Erstreckungsrichtung ihrer Achse A zur Achse R des Ritzels 4 symmetrisch ausgebildet ist. Aus diesem Grunde muß sie unabhängig von dem Anschluß der anzutreibenden Geräte nicht umgedreht werden, wie dies bei den Wellen 26,26a der Fall ist, so daß eine symmetrische Ausgestaltung ausgehend vom Mittelteil 27a nicht erforderlich ist und daher der zusätzliche Zwischenring 25 der Ausgestaltungen der Figuren 2a bis 3b ebenfalls nicht notwendig ist.

Ansonsten erfolgt die Lagerung der Welle 71 in gleicher Weise wie die der Welle 26 der Figuren 2a und 2b, so daß insofern auf die dortigen Ausführungen verwiesen werden kann. Entsprechend der Ausbildung der Welle als Hohlwelle 71 sind zwei Radialringwellendichtungen 44 bzw. 44a auf beiden Seiten vorgesehen.

In der Ausgestaltung der Figur 4a ist zur Verbindung mit dem anzutreibenden Gerät ein Lagerflansch 51a mittels mehrerer Schrauben 61a am Gehäuse 3 befestigt.

## Patentansprüche

1. Achsversetztes Winkelgetriebe mit großem Achsversatz, mit einem abtriebsseitigen, auf einer Stirnseite mit einer Verzahnung versehenen Zahnrad (6) und mit einem an diesem angreifenden Ritzel, wobei das Ritzel (4) als Hohlwelle mit einem Hohlwellenabschnitt ausgebildet und kraftschlüssig drehfest mit einer Motorwelle (8) eines Antriebsmotors verbindbar ist, wobei der Hohlwellenabschnitt des Ritzels (4) lediglich an einer dem Zahnrad (6) abgewandten Lagerstelle (7) gelagert ist, die in einem einstückig mit einem Gehäuse des Getriebes verbundenen am Motor ansetzbaren Lagerschild (8) angeordnet ist, und wobei ein Lager (14) der Lagerstelle für das Ritzel (4) formschlüssig am Getriebegehäuse (3) gehalten ist.

2. Getriebe nach Anspruch 1, dadurch gekennzeichnet, daß der Durchgang des Hohlwellenabschnitts des Ritzels (4) zum Getriebeinneren durch eine Radialwellendichtung (22) abgedichtet ist.

3. Getriebe nach einem der vorangehenden Ansprüche, dadurch gekennzeichnet, daß das Lager (14) für den Hohlwellenabschnitt des Ritzels (4) im Getriebegehäuse (3) zwischen einer dem Zahnrad (6) zugewandten Schulter (13) des Getriebegehäuses (3) und einem öffnungsseitig in eine Nut (16) im Getriebegehäuse (3) eingesetzten Sprengring (17) axial gehalten ist.

4. Getriebe nach einem der vorangehenden Ansprüche, dadurch gekennzeichnet, daß der Hohlwellenabschnitt des Ritzels (4) axial fest im Lager (14) gehalten ist.

5. Getriebe nach Anspruch 4, dadurch gekennzeichnet, daß der Hohlwellenabschnitt des Ritzels (4) getriebeseitig über eine Schulter (18), gegebenenfalls unter Zwischenlage einer Stützscheibe (21a), und motorseitig über eine in ihm ausgebildete Nut (19) und einen in dieser einsitzenden Sprengring axial gehalten ist.

6. Getriebe nach einem der vorangehenden Ansprüche, dadurch gekennzeichnet, daß das Getriebegehäuse (3) bezüglich der Lagerstellen in Richtung der Achse (A) des Zahnrads (6) senkrecht zur Achse (R) des Ritzels (4) symmetrisch ausgebildet ist.

7. Getriebe nach einem der vorangehenden Ansprüche, dadurch gekennzeichnet, daß im Getriebegehäuse (3) in Richtung der Achse (A) des Zahnrads (6) senkrecht zur Achse (R) des Ritzels (4) symmetrisch Lagerstellen für Lager (36, 37) zur Lagerung einer Welle (26, 26a, 71) für das Zahnrad (6) angeordnet sind.

8. Getriebe nach Anspruch 7, dadurch gekennzeichnet, daß im Getriebegehäuse Nuten (42) ausgebildet sind, in die zur axialen Festlegung der Lager (36, 37) Sprengringe (43) eingreifen.

9. Getriebe nach einem der vorangehenden Ansprüche, dadurch gekennzeichnet, daß das Getriebegehäuse (3) mit Befestigungselementen für Flansche (51, 51a) versehen ist.

10. Getriebe nach einem der vorangehenden Ansprüche, dadurch gekennzeichnet, daß die Welle (26,26a,71) des Zahnrads (6) abgestuft ausgebildet ist, wobei der größte Durchmesser in einem Mittelteil (27,27a) im Bereich der Achse (R) des Ritzels (4) angeordnet ist.

11. Getriebe nach einem der vorangehenden Ansprüche, dadurch gekennzeichnet, daß das Zahnrad (6) auf einem Tragbereich (28) reduzierten Durchmessers zwischen einer Schulter (29) der Welle (26, 26a), einem Lager (36) und durch Klebung axial gehalten ist.

12. Getriebe nach Anspruch 9, dadurch gekennzeichnet, daß bei Vorsehung eines Flansches (51) die Welle (26a) einseitig im Flansch (51) gelagert ist.

13. Getriebemotor mit einem Winkelgetriebe nach einem der Ansprüche 1 bis 12 und mit einem Elektromotor, dadurch gekennzeichnet, daß der Motor (24) lediglich ein Motorlager für die Motorwelle (8) aufweist.

14. Getriebemotor nach Anspruch 13, dadurch gekennzeichnet, daß das einzige Motorlager des Motors (24) auf der bezüglich des Getriebes abgewandten Seite angeordnet ist.

## Claims

1. Axis-displaced angular gear with a large axis displacement, with a driven side wheel (6) provided with a tooth system on a front end and with a pinion engaging therewith, the pinion (4) being constructed as a hollow shaft with a hollow shaft portion and is connectable frictionally and in non-rotary manner to a motor shaft (8) of a drive motor, the hollow shaft portion of the pinion (4) only being mounted at a bearing point (7) remote from the toothed wheel (6) and which is located in a bearing plate (8), attachable to the motor and connected in one piece to a housing of the gear and a bearing (14) of the bearing point for the pinion (4) is held positively on the gear housing (3).

2. Gear according to claim 1, characterized in that the passage of the hollow shaft portion of the pinion (4) towards the gear interior is sealed by a radial shaft seal (22).

3. Gear according to one of the preceding claims, characterized in that the bearing (14) for the hollow shaft portion of the pinion (4) is axially held in the gear housing (3) between a shoulder (13) of the latter facing the toothed wheel (6) and a spring clip (17) inserted on the opening side in a groove (16) in the gear housing (3).

4. Gear according to one of the preceding claims, characterized in that the hollow shaft portion of the pinion (4) is held in axially fixed manner in the bearing (14).

5. Gear according to claim 4, characterized in that the hollow shaft portion of the pinion (4) is axially held on the gear side by means of a shoulder (18), optionally accompanied by the interposing of a back-up washer (21a), and on the motor side by means of a groove (19) formed therein and a spring clip to be fitted in the groove.

6. Gear according to one of the preceding claims, characterized in that the gear housing (3) is symmetrically constructed with respect to the bearing points in the direction of the axis (A) of the toothed wheel (6) perpendicular to the axis (R) of the pinion (4).

7. Gear according to one of the preceding claims, characterized in that in the gear housing (3), in the direction of the axis (A) of the toothed wheel (6) perpendicular to the axis (R) of the pinion (4) are symmetrically provided bearing points for bearings (36, 37) for the mounting of a shaft (26, 26a, 71) for the toothed wheel (6).

8. Gear according to claim 7, characterized in that in the gear housing are formed grooves (42), in which engage spring clips (43) for the axial fixing of the bearings (36, 37).

9. Gear according to one of the preceding claims, characterized in that the gear housing (3) is provided with fastening elements for flanges (51, 51a).

10. Gear according to one of the preceding claims, characterized in that the shaft (26, 27a, 71) of the toothed wheel (6) is stepped, the largest diameter being in a central part (27, 27a) in the vicinity of the axis (R) of the pinion (4).

11. Gear according to one of the preceding claims, characterized in that the toothed wheel (6) is axially held on a reduced diameter, support area (28) between a shoulder (29) of the shaft (26, 26a), a bearing (36) and by adhesion.

12. Gear according to claim 9, characterized in that on providing a flange (51), the shaft (26a) is mounted on one side in the flange (51).

13. Geared motor with an angular gear according to one of the claims 1 to 12 and with an electric motor, characterized in that the motor (24) only has one motor bearing for the motor shaft (8).

14. Geared motor according to claim 13, characterized in that the sole motor bearing of the motor (24) is located on the side remote with respect to the gear.

## Revendications

1. Transmission à renvoi d'angle à arbres décalés selon un grand décalage axial, comportant en sortie une roue dentée (6) présentant sur une face une denture et comprenant un pignon (4) s'engrenant avec elle, le pignon (4) étant conformé en arbre creux à partie creuse couplée à ajustage serré et de façon rigide à un arbre moteur (23) d'un moteur d'entraînement, transmission dans laquelle la partie creuse du pignon (4) est portée uniquement par une zone de portée (7) opposée à la roue dentée (6), logée dans un flasque (8) d'une seule pièce avec un carter monté sur la transmission et relié au moteur, et dans laquelle un palier (14) de la zone de portée du pignon (4) est maintenu à engagement de forme sur le carter de transmission (3).

2. Transmission selon la revendication 1, caractérisé en ce que le passage vers l'intérieur de la transmission de la partie en arbre creux du pignon (4) est rendu étanche par une bride radiale (22).

3. Transmission selon l'une quelconque des revendications précédentes, caractérisé en ce que le palier (14) prévu pour la partie en arbre creux du pignon (4) dans le carter (3) de transmission est maintenu axialement entre un épaulement (13) du carter (3) de transmission faisant face à la roue dentée (6) et un jonc (17) inséré du côté de la sortie dans une rainure (16) du carter (3) de transmission.

4. Transmission selon l'une quelconque des revendications précédentes, caractérisée en ce que la partie en arbre creux du pignon (4) est maintenue de façon axialement rigide dans le palier (14).

5. Transmission selon la revendication 4, caractérisé en ce que la partie en arbre creux du pignon (4) est maintenue axialement du côté de la transmission par un épaulement (18) le cas échéant en intercalant un disque d'appui (21a) et du côté du moteur par une rainure (19) conformée dans celui-ci et par un jonc qui y est inséré.

6. Transmission selon l'une quelconque des revendications précédentes, caractérisée en ce que le carter (3) de transmission est conformé symétrique par rapport aux zones de portée en direction de l'axe (A) de la roue dentée (6), perpendiculairement à l'axe (R) du pignon (4).

7. Transmission selon l'une quelconque des revendications précédentes, caractérisée en ce que des zones de portée des paliers (36,37) destinés à porter un arbre (26,26a,71) pour la roue dentée (6) sont disposées symétriques dans le carter (3) de transmission en direction de l'axe (A) de la roue dentée (6), perpendiculairement à l'axe (R) du pignon (4).

8. Transmission selon la revendication 7, caractérisé en ce que des rainures (42) sont conformées dans le carter de transmission, dans lesquelles sont immobilisés les joncs (43) pour le maintien axial des paliers (36,37).

9. Transmission selon l'une quelconque des revendications précédentes, caractérisée en ce que le carter (3) de transmission présente des rigidifications pour flasques (51,51a).

10. Transmission selon l'une quelconque des revendications précédentes, caractérisée en ce que l'arbre (26,26a,71) de la roue dentée (6) est conformé en paliers, conformation selon laquelle le diamètre le plus large se trouve sur un segment médian (27,27a) dans la zone de l'axe (R) du pignon (4).

11. Transmission selon l'une quelconque des revendications précédentes, caractérisé en ce que la roue dentée (6) est maintenue axialement par collage sur une zone de portée (28) de diamètre réduit entre un épaulement (29) de l'arbre (26,26a) et un palier (36).

12. Transmission selon la revendication 9, caractérisée en ce que lorsqu'il est prévu une bride (51), l'arbre (26a) n'est logé dans la bride (51) que d'un côté.

13. Moto-réducteur à transmission angulaire selon l'une quelconque des revendications 1 à 12 et à moteur électrique, caractérisé en ce que le moteur (24) présente uniquement un support de moteur pour l'arbre de moteur (8).

14. Moto-réducteur selon la revendication 13, caractérisé en ce que l'unique support de moteur du moteur (24) est situé sur la face opposée par rapport à la transmission.
